# DEMANDE DE BREVET EUROPEEN

(11) **EP 1 269 841 A1**
(43) Date de publication de la demande: **02.01.2003**
(21) Numéro de dépôt: 01500150.6
(22) Date de dépôt: 19.06.2001
(51) Int. Cl.: A01N 3/04

(54) **Agent imperméabilisant-obturateur d'entailles dans les arbres**

(71) Demandeur: Fernandez-Pello Garcia, Jose Antonio, 48990 Algorta (Vizcaya) (ES)
(72) Inventeur: Fernandez-Pello Garcia, Jose Antonio, 48990 Algorta (Vizcaya) (ES)
(74) Mandataire: Urizar Barandiaran, Miguel Angel

(57) **Abrégé**

Composé imperméabilisant-obturateur d'entailles dans les arbres, qui contient dans sa composition, en tant que produits essentiels, entre 60 et 80% en poids d'une émulsion copolymère éthène-vinylique, entre 4 et 11% de produits isolant-barrière vis-à-vis de l'ozone 0₃; entre 2,5 et 3,5% en poids de triesters d'acides gras et de glycérine, un colloïde protecteur à base d'éther hydroxyéthylique de cellulose, et entre 5 et 10% d'un bouche-pores à base de quartz.

Applicable en agriculture.

## Description

Une fois qu'une entaille a été faite dans un arbre, que ce soit par élagage, par accident ou à la suite de physiopathies, il faut que le composé obturateur qui est appliqué sur cette entaille ait des propriétés imperméabilisantes, autrement dit qu'il empêche les filtrations d'eau qui conduiraient à la ruine de l'arbre.

Jusqu'à maintenant, il n'existe, sur le marché, aucun imperméabilisant-obturateur qui donne une solution au très grave problème des filtrations d'eau dans les arbres, en particulier les arbres fruitiers et plus particulièrement les agrumes.

C'est une chose qui préoccupe la plupart des ingénieurs agronomes et des agriculteurs contactés, de telle sorte qu'ils ne font pas les tailles tous les ans, étant donné le peu de confiance que leur inspirent les produits actuellement sur le marché.

Résoudre le problème des filtrations d'eau suppose l'obtention de fruits plus sains et meilleurs, car cela supposerait la taille annuelle de toutes sortes d'arbres.

Sur le marché, il existe des produits qui essaient de résoudre le problème de l'obturation imperméabilisante et qui ont pour base:
a).- Bitume d'asphalte (60%) + goudrons de houille (20%)
b).- Brais (75%) + crésols + xylols (5%)
c).- Cire vierge (35%) + colophane (35%) + huile végétale (30%)
d).- Résine synthétique (81%).

Aucun d'entre eux ne donne de résultats satisfaisants.

Le (d) de Bayer est le plus significatif du marché. Il est commercialisé sous le nom de BAYLETON.

Le BAYLETON présente un allongement insuffisant, ce qui fait que, lorsque la nouvelle peau se forme dans l'entaille, en s'étirant, elle se déchire et se craquelle, ce qui permet l'entrée d'eau.

Le composé, qui fait l'objet de l'invention, se caractérise par le fait qu'entre 60% et 80% de son poids est constitué par une émulsion copolymère éthène-vinylique, et entre 4 et 11% par des produits isolant-barrière vis-à-vis de l'ozone 0₃.

La présence de copolymère éthène (-CH = CH-) vinylique génère un composé-pellicule imperméable à l'eau qui, comparé au BAYLETON, est plus souple et plus élastique, a moins de force de traction et un allongement très supérieur.

On en déduit que que lorsque la nouvelle peau de l'entaille de la coupe se développe -elle le fait entre l'ancienne écorce et la partie charnue, juste à l'endroit où circule la sève, d'où une croissance périphérique, de la même façon que la formation calleuse-, la pellicule du nouveau composé s'étire, ce qui permet un accroissement meilleur et plus rapide, du fait de sa moindre force de traction et, lorsque la pellicule se déchire, la nouvelle peau a recouvert la zone calleuse périphérique, empêchant ainsi les filtrations d'eau.

Tout ce qui a été dit jusqu'à présent a été constaté grâce à des essais sur le terrain; citons, par exemple, celui qui a été fait avec le composé objet de l'invention (ci-dessous EKOVER) sur 3000 orangers de la région de Nules (Castellón) et avec le BAYLETON sur 25 orangers de la même zone. Dans les deux cas, on a utilisé des orangers à pied amer et à pied tolérant à la tristesse.

Le résultat en a été le suivant:
1.- Avec l'EKOVER, la nouvelle peau commence à pousser avant 40 jours. Avec le BAYLETON, cela a lieu au bout de 4 mois.
   Avec l'EKOVER, on obtient 100% de nouvelle peau au bout de 12-14 mois, alors qu'avec le BAYLETON, il faut 2-3 ans pour des entailles de 5 et 6 cm. de Ø.
2.- Sur les 3000 arbres traités avec EKOVER, il n'y a eu aucune filtration. Le bois, si on faisait des entailles superficielles, était intact.
3.- Dans les entailles de coupe traitées avec BAYLETON, on a observé des crevasses dans la pellicule au bout de 7-8 mois, ce qui a entraîné l'entrée d'eau et, par conséquent, n'a pas apporté de solution au problème existant..

Lors des différents essais, on a constaté que le copolymère éthène-vinylique, ci-dessous produit (1), subissait également, de lui-même, des craquelures indésirables. On en a étudié la raison et on a constaté qu'elles étaient dues à la présence d'ozone 0₃ atmosphérique, c'est pourquoi les antioxydants de l'0₃ déjà mentionnés, ou isolant-barrière de celui-ci, ont été ajoutés au composé.

On a constaté que les hydrocarbures saturés, aussi bien linéaires que ramifiés, remplissaient la fonction isolant-barrière recherchée vis-à-vis de l'0₃ de la pellicule plastique formée par le copolymère éthène-vinylique. On a choisi, de préférence, un mélange d'hydrocarbures saturés avec une résine d'esters et d'acides organiques (produits 6 et 7).

L'EKOVER contient également des triesters d'acides gras et de glycérine (produit 4) dans une proportion comprise entre 2,5 et 3,5%, qui agissent en protégeant le bois et en améliorant l'adhérence et la résistance à l'eau du produit final. Pour faciliter l'émulsion de ce produit (4) dans l'eau et son incorporation dans le composé final, on ajoute entre 0,1 et 0,2% de mono-oléate de sorbitan (produit 5).

L'EKOVER contient également un colloïde protecteur (produit 12), étant choisi comme tel le colloïde à base d'eau d'éther hydroxyéthylique de cellulose en présence d'isothiazolinone et dérivés de l'ammoniac, qui joue le rôle de colloïde protecteur et, en même temps, d'agent thixotrope. On obtient des viscosités Brookfield de 240 et 45 poises en travaillant à 10 et 100 tours/minute avec une broche, 6 et 20° C de température. Ceci permet au recouvrement de l'EKOVER sur des entailles de coupe faites avec une scie de couvrir parfaitement toute la surface irrégulière de l'arbre. Les produits fluides ne recouvraient pas convenablement la partie supérieure de l'entaille de coupe, surtout sur des arbres de grande envergure (noyers, châtaigniers, cerisiers, etc.), ce qui facilitait l'entrée d'eau.

Ce colloïde (12) doit être ajouté dans une proportion comprise entre 8 et 15% de l'ensemble du composé, pour ne pas nuire à la résistance à l'eau de la pellicule du produit final.

Le bois a des pores qu'il faut boucher, en choisissant pour cela le quartz (9) comme produit, qui constitue entre 5 et 10% du poids du composé final.

L'addition de quartz (9), même dans le cas d'un bois très poreux, doit respecter les proportions indiquées, car un excès de celui-ci influerait sur la traction et la dureté de la pellicule et faciliterait l'apparition de crevasses.

Comme conservateur-bactéricide (produit 8), on utilise de l'hexadiènate potassique, qui est un conservateur naturel, dans une proportion comprise entre 0,8 et 1,2%, aussi le produit final peut-il être considéré comme étant écologique.

Pour favoriser la formation de la pellicule par le produit (1) à basse température et éviter la formation de mousses, on ajoute à l'EKOVER un butoxyéthyle acétate (produit 2) dans une proportion comprise entre 0,3 et 0,6%.

Comme produit (3), (10), (13) anti-moussant, on ajoute un dérivé gras en faibles quantités.

Un pigment (produit 11), par exemple vert, et un colorant (produit 14) seront également ajoutés.

On constate que plusieurs des produits mentionnés peuvent se trouver dans d'autres emplâtres connus, mais il faut faire entrer dans la composition du produit final, sans oublier que la véritable essence de l'invention se trouve dans la pellicule à créer par le produit (1), d'où la présence conseillée d'un antioxydant de l'0₃ (produits 6 et 7).

Pour mener à bien la fabrication du composé qui fait l'objet de l'invention, on suit les étapes suivantes:
1.- Nettoyer, au préalable, le réacteur avec de l'eau sous pression du réseau d'alimentation.
2.- Aménager la zone de travail, de façon à permettre un processus correct de fabrication.
3.- Charger le produit (1).
4.- Mettre en marche l'agitateur du réacteur.
5.- Ajouter le produit (2), maintenir l'agitation 5 minutes et, ensuite, ajouter le produit (3) en maintenant l'agitation pendant 5 minutes supplémentaires.
6.- Les produits (4), (5), (6) et (7) seront préparés dans un mélangeur à disque, à 700 tours/minute, pendant 15 minutes environ.
7.- Ajouter le mélange précédent au réacteur principal.
8.- Charger les solides (8) et (9) pendant une durée approximative de 15 minutes, en maintenant l'agitation à 1.400 tours/minute dans le moteur, afin d'éviter la formation de grumeaux.
9.- Ajouter les produits (10) et (11) en agitant pendant 15 minutes.
10.- En ajoutant le produit (12), augmenter la vitesse jusqu'à 2.800 tours/minute et maintenir toute la masse pendant une heure en agitant. Cet ingrédient, constitué par plusieurs produits, sera préparé, au préalable, dans une machine ayant un agitateur à disque déplaçable verticalement et avec 700 à 1.500 tours/minute.
11.- Enfin, ajouter les produits (13) et (14) et maintenir l'ensemble agité à 2.800 tours/minute pendant 10 minutes.
12.- Arrêter le réacteur et prendre des échantillons pour les analyser.
13.- Contrôler le Ph, la densité, la viscosité et l'indice thixotrope du produit final, pour confirmer les limites établies dans le contrôle de la qualité.

Il faut comprendre que des altérations, en ce qui concerne l'apport de produits, ou les variations dans les durées et les tours/minute d'agitation n'ont pas d'incidence sur l'essence du processus de fabrication.

## Revendications

1. Composé imperméabilisant-obturateur d'entailles dans les arbres, se caractérisant par le fait qu'il se compose d'une émulsion copolymère éthène-vinylique qui constitue entre 60 et 80% de son poids, et de produits isolant-barrière vis-à-vis de l'ozone O₃ constituant entre 4 et 11% de son poids.

2. Composé imperméabilisant-obturateur d'entailles dans les arbres, selon la revendication précédente, se caractérisant par le fait qu'il contient de 2,5 à 3,5% en poids de triesters d'acides gras et de glycérine.

3. Composé imperméabilisant-obturateur d'entailles dans les arbres, selon la deuxième revendication, se caractérisant par le fait qu'il contient de 0,1 à 0,2% de mono-oléate de sorbitan.

4. Composé imperméabilisant-obturateur d'entailles dans les arbres, selon les revendications précédentes, se caractérisant par le fait qu'il contient entre 8 et 15% d'un colloïde protecteur à base d'éther hydroxyéthylique de cellulose.

5. Composé imperméabilisant-obturateur d'entailles dans les arbres, selon les revendications précédentes, se caractérisant par le fait qu'il contient entre 5 et 10% d'un bouche-pores à base de quartz.

6. Composé imperméabilisant-obturateur d'entailles dans les arbres, selon la première revendication, se caractérisant par le fait qu'il contient entre 0,3 et 0,6% de butoxyéthyle acétate.

7. Composé imperméabilisant-obturateur d'entailles dans les arbres, selon les revendications précédentes, se caractérisant par le fait qu'il contient entre 0,8 et 1,2% d'un conservateur bactéricide naturel à base d'hexadiènate potassique.

8. Composé imperméabilisant-obturateur d'entailles dans les arbres, selon la première revendication, se caractérisant par le fait que les produits isolant-barrière vis-à-vis de l'ozone 0₃ contiennent des hydrocarbures saturés.

9. Composé imperméabilisant-obturateur d'entailles dans les arbres, selon la première revendication, se caractérisant par le fait que les produits isolant-barrière vis-à-vis de l'ozone sont un mélange d'hydrocarbures saturés avec une résine d'esters et d'acides organiques.

10. Composé imperméabilisant-obturateur d'entailles dans les arbres, selon la première revendication, se caractérisant par le fait qu'il contient un anti-moussant de la copolymérisation éthène-vinylique.
